(19) Europäisches Patentamt / European Patent Office / Office européen des brevets

(11) **EP 4 597 960 A1**

(12) **EUROPEAN PATENT APPLICATION**
published in accordance with Art. 153(4) EPC

(43) Date of publication:
**06.08.2025  Bulletin 2025/32**

(21) Application number: **23869434.3**

(22) Date of filing: **17.02.2023**

(51) International Patent Classification (IPC):
**H04L 27/00** $^{(2006.01)}$

(52) Cooperative Patent Classification (CPC):
**H04B 7/0456; H04B 7/06; H04L 27/00**

(86) International application number:
**PCT/CN2023/076991**

(87) International publication number:
**WO 2024/066171 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022  PCT/CN2022/122940**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **INDICATION REPORTING METHOD AND APPARATUS THEREOF**

(57) Embodiments of the present application disclose an indication reporting method and an apparatus thereof, which can be applied to communication systems such as a long term evolution (LTE) system, a 5th generation (5G) mobile communication system, a 5G new radio (NR) system, or other future novel mobile communication systems. The method comprises: determining codebook parameter information, and according to the codebook parameter information, determining codebook indication information corresponding to a data transmission layer, and sending the codebook indication informa-
tion to a network-side device. By means of implementing the embodiments of the present application, the codebook indication information corresponding to the data transmission layer can be determined by means of the codebook parameter information, and a non-zero coefficient and the strongest coefficient of a combined coefficient matrix in the codebook are indicated by means of the codebook indication information, thereby reducing feedback overhead of a terminal device, saving channel resources, and improving communication efficiency.

determining codebook parameter information, and determining codebook indication information corresponding to a data transmission layer according to the codebook parameter information — S201

↓

sending the codebook indication information to a network device — S202

FIG. 2

## Description

## CROSS-REFERENCE TO RELATED APPLICATIONS

This disclosure is based on and claims priority to International Application No. PCT/CN2022/122940, filed on September 29, 2022, the entire contents of which are incorporated herein by reference.

## TECHNICAL FIELD

The present disclosure relates to the field of wireless communication technology, and specifically to an indication reporting method and apparatus.

## BACKGROUND

In a wireless communication network, a network device determines precoding of downlink data transmission based on a codebook, and relevant indication information in the codebook is reported by a terminal to the network device. However, when the terminal is moving at a medium or high speed, the channel changes rapidly in a time domain (TD), and an overhead for the terminal to upload codebook-related indication information is large, so a channel change may not match the precoding. However, there is a lack of effective means for uploading the codebook-related indication information.

## SUMMARY

Embodiments of the present disclosure provide an indication reporting method and apparatus, applied to a long term evolution (LTE) system, a 5th generation (5G) mobile communication system, a 5G new radio (NR) system, or other new mobile communication systems in the future. Codebook indication information corresponding to a data transmission layer is determined according to codebook parameter information; and the codebook indication information indicates a non-zero coefficient and a dominant coefficient of a combination coefficient matrix in a codebook, which reduces a feedback overhead of a terminal, saves a channel resource, and improves a communication efficiency.

In a first aspect, the embodiments of the present disclosure provide an indication reporting method, including:

determining codebook parameter information, and determining codebook indication information corresponding to a data transmission layer according to the codebook parameter information; and sending the codebook indication information to a network device,

in which the codebook indication information includes at least one of:

non-zero coefficient quantity information, in which a number of non-zero coefficients included in the non-zero coefficient quantity information is less than or equal to a maximum non-zero coefficient number, the number of non-zero coefficients is a number of non-zero coefficients of each data transmission layer or a number of non-zero coefficients of all data transmission layers, and the maximum non-zero coefficient number is a maximum non-zero coefficient number of each data transmission layer or a maximum non-zero coefficient number of all data transmission layers;
non-zero coefficient position indication information; or
dominant coefficient indication information.

Optionally, the codebook parameter information includes codebook parameter, in which the codebook parameter includes a first codebook parameter $\beta$ or a second codebook parameter $\gamma$, and a first number $S_v$ of Doppler domain basis vectors DDbasis; a second number L of spatial domain basis vectors SDbasis or channel status information reference signal (CSI-RS) ports; and a third number $M_v$ of frequency domain basis vectors FDbasis.

Optionally, determining the codebook indication information corresponding to the data transmission layer according to the codebook parameter information includes:

determining a Type II codebook structure based on Doppler domain enhancement according to the codebook parameter information; and
determining the codebook indication information corresponding to the data transmission layer according to the Type II codebook structure based on the Doppler domain enhancement, in which the codebook indication information is configured to determine relevant information included in a combination coefficient matrix in the Type II codebook structure based on the Doppler domain enhancement.

Optionally, determining the codebook indication information corresponding to the data transmission layer according to the Type II codebook structure based on the Doppler domain enhancement includes:

determining non-zero coefficient quantity information and non-zero coefficient position indication information in a combination coefficient matrix corresponding to each transmission layer according to the codebook parameter and the first number; and
determining the dominant coefficient indication information according to a correspondence relationship between the SDbasis or CSI-RS port and the DDbasis.

Optionally, the Type II codebook structure based on the Doppler domain enhancement includes: a first codebook structure and a second codebook structure,
in which the first codebook structure includes:

> a matrix composed of SDbasis or a CSI-RS port selection matrix;
> the combination coefficient matrix;
> a matrix composed of FDbasis; and
> a matrix composed of DDbasis, and
> in which the second codebook structure includes:
>
>> the matrix composed of SDbasis or the CSI-RS port selection matrix;
>> the combination coefficient matrix; and
>> the matrix composed of FDbasis.

Optionally, determining the non-zero coefficient quantity information of each transmission layer according to the codebook parameter and the first number includes: generating codebook indication information of the first codebook structure by selecting the same first number $S_v$ of DDbasis for each first combination, and determining the maximum non-zero coefficient number of each transmission layer as $K_0 = \beta 2LM_vS_v$, in which the first combination includes one SDbasis or CSI-RS port and one FDbasis.

Optionally, determining the maximum non-zero coefficient number of each transmission layer according to the codebook parameter and the first number includes:

> determining a fourth number $M_v$' of FDbasis-DDbasis pairs corresponding to the SDbasis or CSI-RS port; and
> generating codebook indication information of the first codebook structure by selecting the same fourth number $M_v$' of FDbasis-DDbasis pairs for each SDbasis or CSI-RS port, and determining the maximum non-zero coefficient number of each transmission layer as $K_0 = \beta 2LM_v'$.

Optionally, determining the non-zero coefficient quantity information of each transmission layer according to the codebook parameter and the first number includes: in response to the matrix composed of DDbasis in the first codebook structure being an identity matrix, determining the maximum non-zero coefficient number of each transmission layer as $K_0 = N * \beta 2LM_v$, in which N is an order of the identity matrix.

Optionally, determining the non-zero coefficient quantity information of each transmission layer according to the codebook parameter and the first number includes: in response to the codebook indication information adopting the second codebook structure, generating a plurality pieces of the codebook indication information, and determining the maximum non-zero coefficient number corresponding to each combination coefficient matrix in the codebook indication information as $K_0 = \beta 2LM_v$, in which the codebook indication information includes a plurality of different combination coefficient matrices.

Optionally, determining the non-zero coefficient quantity information of each transmission layer according to the codebook parameter and the first number includes:

> determining a fifteenth number S' of SDbasis-DDbasis pairs corresponding to the FDbasis; and
> generating codebook indication information of the first codebook structure by selecting the same fifteenth number S' of SDbasis-DDbasis pairs for each FDbasis, and determining the maximum non-zero coefficient number of each transmission layer as $K_0 = \gamma M_vS'$.

Optionally, determining the non-zero coefficient quantity information of each transmission layer according to the codebook parameter and the first number includes:

> determining a sixteenth number $S''$ of SDbasis-DDbasis pairs corresponding to the DDbasis; and
> generating codebook indication information of the first codebook structure by selecting the same sixteenth number S" of SDbasis-DDbasis pairs for each DDbasis, and determining the maximum non-zero coefficient number of each transmission layer as $K_0 = \gamma S_vS''$.

Optionally, determining the non-zero coefficient quantity information of each transmission layer according to the codebook parameter and the first number includes:

> determining a fifth number $S_{l,v}$ of DDbasis corresponding to each first combination, in which the first combination includes one SDbasis or CSI-RS port and one FDbasis; and
> generating codebook indication information of the first codebook structure by selecting the fifth number $S_{l,v}$ of the DDbasis corresponding to each first combination, and determining the maximum non-zero coefficient number of each transmission layer as
>
> $K_0 = \beta \sum_{l=1}^{2LM_v} S_{l,v}$, in which l is an index of the first combination.

Optionally, determining the non-zero coefficient quantity information of each transmission layer according to the codebook parameter and the first number includes:

> determining a sixth number $M_{l',v}'$ of FDbasis-DDbasis pairs corresponding to each SDbasis or CSI-RS port; and
> generating codebook indication information of the first codebook structure by selecting the sixth number $M'_{l',v}$ of FDbasis-DDbasis pairs corresponding to each SDbasis or CSI-RS port, and determining the maximum non-zero coefficient number of each transmission layer as $K_0 = \beta \sum_{l=1}^{2L} M'_{l',v}$, in which $l'$ is an index of the SDbasis or CSI-RS port.

Optionally, determining the non-zero coefficient quantity information of each transmission layer according to the codebook parameter and the first number includes:

in response to DDbasis corresponding to each antenna polarization direction being same, determining a seventh number $S'_{l,v}$ of DDbasis corresponding to each first combination, in which the first combination includes one SDbasis or CSI-RS port and one FDbasis; and
generating codebook indication information of the first codebook structure by selecting the seventh number $S'_{l,v}$ of the DDbasis corresponding to each first combination, and determining the maximum non-zero coefficient number of each transmission layer as $K_0 = 2\beta \sum_{l=1}^{LM_v} S'_{l,v}$, in which $l$ is an index of a third combination.

Optionally, determining the non-zero coefficient quantity information of each transmission layer according to the codebook parameter and the first number includes:

in response to DDbasis corresponding to each antenna polarization direction being same, determining an eighth number $M''_{l',v}$ of FDbasis-DDbasis pairs corresponding to each SDbasis or CSI-RS port; and
generating codebook indication information of the first codebook structure by selecting the eighth number $M''_{l',v}$ of the FDbasis-DDbasis pairs corresponding to each SDbasis or CSI-RS port, and determining the maximum non-zero coefficient number of each transmission layer as $K_0 = 2\beta \sum_{l=1}^{L} M''_{l',v}$, in which $l'$ is an index of the SDbasis or CSI-RS port.

Optionally, the method further includes:
determining a ninth number S, and selecting a bitmap of a size $2LM_vS$ according to the ninth number S to indicate the non-zero coefficient position indication information.
Optionally, the method further includes:
determining a tenth number $M'$, and selecting a bitmap of a size $2LM'$ according to the tenth number $M'$ to indicate the non-zero coefficient position indication information.
Optionally, the method further includes:
determining an eleventh number $S_l$, and selecting a bitmap of a size $\sum_{l=1}^{2LM_v} S_l$ or $2\sum_{l=1}^{LM_v} S'_{l,v}$ according to the eleventh number $S_l$ to indicate the non-zero coefficient position indication information.
Optionally, the method further includes:
determining a twelfth number $M'_l$, and selecting a bitmap of a size $\sum_{l=1}^{2L} M'_l$ or $2\sum_{l=1}^{L} M''_{l',v}$ according to the twelfth number $M'_l$ to indicate the non-zero coefficient position indication information.
Optionally, the method further includes:
selecting a bitmap of a size $2L \times M_v$ according to the order N of the identity matrix to indicate the non-zero coefficient position indication information.
Optionally, the method further includes:
in response to the second codebook structure including a thirteenth number $N'$ of combination coefficient matrices, for each combination coefficient matrix, selecting a bitmap of a size $2L \times M_v$ according to the third number to indicate the non-zero coefficient position indication information.
Optionally, the method further includes:
selecting a bitmap of a size $M_vS'$ to indicate the non-zero coefficient position indication information.
Optionally, the method further includes:
selecting a bitmap of a size $S_vS''$ to indicate the non-zero coefficient position indication information.
Optionally, determining the maximum non-zero coefficient number of each transmission layer according to the codebook parameter and the first number includes one of:

in response to a transmission rank $v$ being greater than 1, determining that a total number of non-zero coefficients is less than or equal to $2K_0$; or
in response to a transmission rank $v$ being greater than 1, determining that a total number of non-zero coefficients is less than or equal to $K_0 * v$, in which a number of the data transmission layers is determined by the transmission rank v.

Optionally, determining the maximum non-zero coefficient number of each transmission layer according to the codebook parameter $\beta$ and the first number includes one of:
in response to a transmission rank $v$ being greater than 1, determining that a total number of non-zero coefficients is less than or equal to $2K_0 * N$.
Optionally, the method further includes:

each data transmission layer adopting the same bitmap to indicate the non-zero coefficient position indication information; or
each data transmission layer adopting a bitmap of the layer to indicate the non-zero coefficient position indication information; or
dividing the data transmission layers into transmission layer groups, in which data transmission layers in each transmission layer group adopt the same bitmap to indicate the non-zero coefficient position indication information.

Optionally, the method further includes:
in response to β=1 or γ=1, not reporting the non-zero coefficient position indication information.

Optionally, determining the dominant coefficient indication information includes:
indicating the dominant coefficient indication information

by information of $\lceil \log_2 2L \rceil$ bits.

Optionally, determining the dominant coefficient indication information includes:
determining a size $K$ of a bitmap for indicating the non-zero coefficient position indication information, and indicating the dominant coefficient indication information

by information of $\lceil \log_2 K \rceil$ bits based on the *size K* of the bitmap.

Optionally, determining the dominant coefficient indication information includes:
indicating a dominant coefficient of each data transmission layer by information of $\lceil \log_2 K' \rceil$ bits, in which $K'$ represents the maximum non-zero coefficient number or the number of non-zero coefficients corresponding to the data transmission layer.

Optionally, determining the dominant coefficient indication information includes:
reporting $N$ or $N'$ dominant coefficients, in which the dominant coefficient is indicated by one of followings:

indicating the dominant coefficient indication infor-

mation by information of $\lceil \log_2 2L \rceil$ bits; or
determining a size $K$ of a bitmap for indicating the non-zero coefficient position indication information, and indicating the dominant coefficient indication information by information of $\lceil \log_2 K \rceil$ bits based on the *size K* of the bitmap.

Optionally, determining the dominant coefficient indication information includes:

indicating the dominant coefficient indication infor-

mation by information of $\lceil \log_2 2LM_v' \rceil$ bits; or
indicating the dominant coefficient indication information by information of

$\lceil log_2 2L \rceil + \lceil log_2 M_v Q \rceil$ bits.

Optionally, determining the dominant coefficient indication information includes:

indicating the dominant coefficient indication infor-

mation by information of $\lceil \log_2 M_v S' \rceil$ bits; or
indicating the dominant coefficient indication information by information of

$\lceil \log_2 M_v \rceil + \lceil \log_2 2LS_v \rceil$ bits; or
indicating the dominant coefficient indication infor-

mation by information of $\lceil \log_2 M_v \rceil$ bits.

Optionally, determining the dominant coefficient indication information includes:

indicating the dominant coefficient indication infor-

mation by information of $\lceil log_2 S_v S'' \rceil$ bits; or
indicating the dominant coefficient indication information by information of

$\lceil log_2 S_v \rceil + \lceil log_2 2LM_v \rceil$ bits; or
indicating the dominant coefficient indication infor-

mation by information of $\lceil log_2 S_v \rceil$ bits.

Optionally, the first number $S_v$ of DDbasis, the second number L of SDbasis or CSI-RS ports, the third number $M_v$ of FDbasis, and the transmission rank v are determined according to configuration indication of the network device or determined by the terminal.

Optionally, the first codebook parameter $\beta$ and the second codebook parameter $\gamma$ are determined by configuration of the network device.

In a second aspect, the embodiments of the present disclosure provide another indication reporting method, performed by a network device, including:

receiving codebook indication information sent by a terminal, in which the codebook indication information includes at least one of: non-zero coefficient quantity information, non-zero coefficient position indication information, or dominant coefficient indication information; and
determining precoding of downlink data transmission according to the codebook indication information.

In a third aspect, the embodiments of the present disclosure provide a communication apparatus. The communication apparatus has some or all of the functions of the terminal in the method in the first aspect above, for example, the communication apparatus may have functions in some or all of the embodiments of the present disclosure or may have functions for independently implementing any one of the embodiments of the present disclosure. The functions may be realized by hardware or by software which is executed by hardware. The hardware or software includes one or more units or modules corresponding to the above functions.

In one implementation, the communication apparatus may include a transceiver module and a processing module, in which the processing module is configured to support the communication apparatus to perform corresponding functions in the above method, the transceiver module is configured to support a communication between the communication apparatus and other devices. The communication apparatus may also include a storage module, in which the storage module is configured to couple with the transceiver module and the processing module, and save a computer program and data necessary for the communication apparatus.

As an example, the processing module may be a processor, the transceiver module may be a transceiver or a communication interface, and the storage module may be a memory. In one implementation, the communication apparatus includes:

a processing module, configured to determine codebook parameter information, and determine codebook indication information corresponding to a data transmission layer according to the codebook parameter information; and
a transceiver module, configured to send the codebook indication information to a network device,
in which the codebook indication information includes at least one of:

non-zero coefficient quantity information, in which a number of non-zero coefficients included in the non-zero coefficient quantity information is less than or equal to a maximum non-zero coefficient number, the number of non-zero coefficients is a number of non-zero coefficients of each data transmission layer or a number of non-zero coefficients of all data transmission layers, and the maximum non-zero coefficient number is a maximum non-zero coefficient number of each data transmission layer or a maximum non-zero coefficient number of all data transmission layers;
non-zero coefficient position indication information; or
dominant coefficient indication information.

In a fourth aspect, the embodiments of the present disclosure provide another communication apparatus. The communication apparatus has some or all of the functions of the network device in the method in the second aspect above, for example, the communication apparatus may have functions in some or all of the embodiments of the present disclosure or may have functions for independently implementing any one of the embodiments of the present disclosure. The functions may be realized by hardware or by software which is executed by hardware. The hardware or software includes one or more units or modules corresponding to the above functions.

In one implementation, a structure of the communication apparatus may include a transceiver module and a processing module, in which the processing module is configured to support the communication apparatus to perform corresponding functions in the above method, and the transceiver module is configured to support a communication between the communication apparatus and other devices. The communication apparatus may also include a storage module, in which the storage module is configured to couple with the transceiver module and the processing module, and save a computer program and data necessary for the communication apparatus.

As an example, the processing module may be a processor, the transceiver module may be a transceiver or a communication interface, and the storage module may be a memory. In one implementation, the communication apparatus includes:

a transceiver module, configured to receive codebook indication information sent by a terminal, in which the codebook indication information includes at least one of: non-zero coefficient quantity information, non-zero coefficient position indication information, or dominant coefficient indication information; and
a processing module, configured to determine precoding of downlink data transmission according to the codebook indication information.

In a fifth aspect, the embodiments of the present disclosure provide a communication apparatus including a processor. When a computer program in a memory is called by the processor, the method in the first aspect is implemented.

In a sixth aspect, the embodiments of the present disclosure provide a communication apparatus including a processor. When a computer program in a memory is called by the processor, the method in the second aspect is implemented.

In a seventh aspect, the embodiments of the present disclosure provide a communication apparatus, including a processor and a memory for storing a computer program. When the computer program stored in the memory is executed by the processor, the communication apparatus is caused to implement the method in the first aspect.

In an eighth aspect, the embodiments of the present disclosure provide a communication apparatus, including a processor and a memory for storing a computer program. When the computer program stored in the memory is executed by the processor, the communication apparatus is caused to implement the method in the second aspect.

In a ninth aspect, the embodiments of the present disclosure provide a communication apparatus, including a processor and an interface circuit for receiving code instructions and transmitting the code instructions to the processor, in which the processor is configured to run the code instructions to cause the apparatus to implement the method in the first aspect.

In a tenth aspect, the embodiments of the present disclosure provide a communication apparatus, including a processor and an interface circuit for receiving code instructions and transmitting the code instructions to the processor, in which the processor is configured to run the code instructions to cause the apparatus to implement the method in the second aspect.

In an eleventh aspect, the embodiments of the present disclosure provide an indication reporting system, in which the system includes the communication apparatus in the third aspect and the communication apparatus in the fourth aspect, or the communication apparatus in the fifth aspect and the communication apparatus in the sixth aspect, or the communication apparatus in the seventh aspect and the communication apparatus in the eighth aspect, or the communication apparatus in the ninth aspect and the communication apparatus in the tenth aspect.

In a twelfth aspect, the embodiments of the present disclosure provide a computer-readable storage medium for storing instructions used by the terminal. When the instructions are executed, the terminal is caused to implement the method in the first aspect.

In a thirteen aspect, the embodiments of the present disclosure provide a computer-readable storage medium for storing instructions used by the terminal. When the instructions are executed, the terminal is caused to implement the method in the second aspect.

In a fourteenth aspect, the embodiments of the present disclosure provide a computer program product including a computer program. When the computer program is running on a computer, the computer is caused to implement the method in the first aspect.

In a fifteenth aspect, the embodiments of the present disclosure provide a computer program product including a computer program. When the computer program is running on a computer, the computer is caused to implement the method in the second aspect.

In a sixteenth aspect, the embodiments of the present disclosure provide a chip system, including at least one processor and an interface configured to support the terminal to perform functions in the first aspect, for example, at least one of determining or processing data and information in the above method. In one possible design, the chip system also includes a memory for saving a computer program and data necessary for the terminal. The chip system may include a chip, or a chip and other discrete devices.

In a seventeenth aspect, the embodiments of the present disclosure provide a chip system, including at least one processor and an interface configured to support the network device to perform functions in the second aspect, for example, at least one of determining or processing data and information in the above method. In one possible design, the chip system also includes a memory for saving a computer program and data necessary for the network device. The chip system may include a chip, or a chip and other discrete devices.

In an eighteenth aspect, the embodiments of the present disclosure provide a computer program. When the computer program is running on a computer, the computer is caused to implement the method in the first aspect.

In a nineteenth aspect, the embodiments of the present disclosure provide a computer program. When the computer program is running on a computer, the computer is caused to implement the method in the second aspect.

## BRIEF DESCRIPTION OF THE DRAWINGS

In order to clearly illustrate technical solutions of embodiments of the present disclosure or a background, a brief description of drawings used in embodiments or the background is given below.

FIG. 1 is a schematic diagram of an architecture of a communication system according to an embodiment of the present disclosure.
FIG. 2 is a flowchart of an indication reporting method according to an embodiment of the present disclosure.
FIG. 3 is a flowchart of an indication reporting method according to an embodiment of the present disclosure.
FIG. 4 is a flowchart of an indication reporting method according to an embodiment of the present disclosure.
FIG. 5 is a flowchart of an indication reporting method according to an embodiment of the present disclosure.
FIG. 6 is a block diagram of a communication apparatus according to an embodiment of the present disclosure.
FIG. 7 is a block diagram of another communication apparatus according to an embodiment of the present disclosure.
FIG. 8 is a block diagram of a chip according to an embodiment of the present disclosure.

## DETAILED DESCRIPTION

In order to better understand the indication reporting method in embodiments of the present disclosure, a communication system to which the embodiments of the present disclosure are applicable is firstly described as follows.

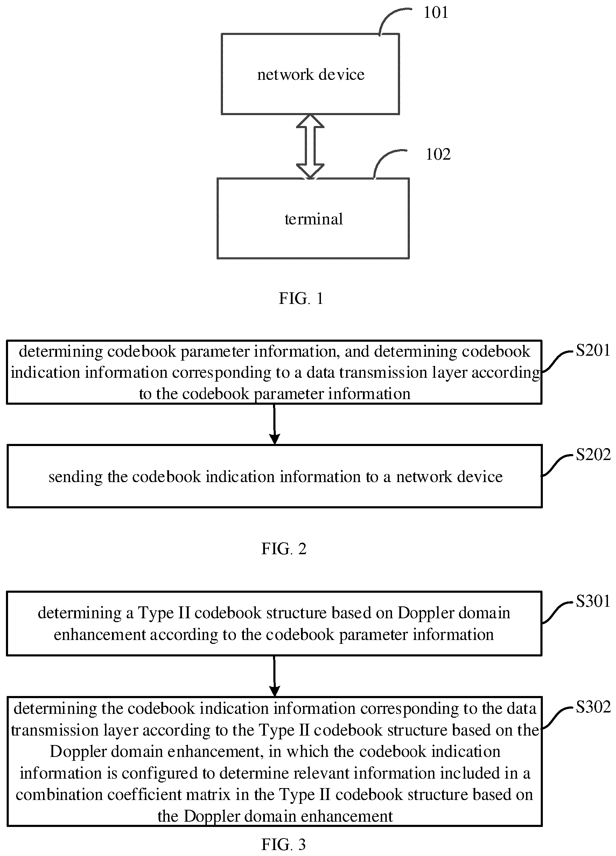

Please refer to FIG. 1, which is a schematic diagram of an architecture of a communication system according to an embodiment of the present disclosure. The communication system may include, but is not limited to, one network device and one terminal. The number and form of devices shown in FIG. 1 are only shown as an example, and do not constitute a limitation on the embodiments of the present disclosure. The communication system may include two or more network devices and two or more terminals in a practical application. The communication system in FIG. 1 including one network device 101 and one terminal 102 is shown as an example.

It needs to be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future. It needs to be noted that sidelink in the embodiments of the present disclosure may also be called a side link or a direct link.

The network device 101 in the embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access node in a wireless networking (Wi-Fi™) system. The embodiments of the present disclosure do not limit the specific technology and the specific device form used by the network device. The network device in the embodiments of the present disclosure may be composed of a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 102 in the embodiments of the present disclosure is an entity on the user side for receiving or sending signals, such as a mobile phone. Terminal may also be called a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in autonomous driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

In the wireless communication, both a structure of a Rel-16 Type II codebook and a structure of a Rel-17 Type II port selection codebook may be expressed as

$$W = W_1 \widetilde{W}_2 W_f^H$$

, in which $\widetilde{W}_2 \in \mathbb{C}^{2L \times M}$ is a combination coefficient matrix that has a matrix dimension of 2L rows and M columns and includes complex coefficients. $W_1$ represents a matrix composed of spatial domain basis vector(s) (hereinafter, SD basis for short) or a channel status information-reference signal (CSI-RS) port selection matrix, $W_f$ represents a matrix composed of frequency domain basis vector(s) (hereinafter, FD basis for short) , and $W_d$ represents a matrix composed of Doppler domain basis vector(s) (hereinafter, DD basis for short) . Considering an impact of a feedback overhead and a feedback coefficient on performance, it is unnecessary for a UE to report all 2LM complex coefficients in the coefficient matrix to a gNB. According to a current 3GPP standard, for each data transmission layer, the UE only reports up to $K_0 = \beta 2LM$ non-zero coefficients, in which $\beta \leq 1$ and the number of non-zero coefficients of all transmission layers is not greater than $2K_0$. When $\beta < 1$, since only some non-zero coefficients are reported, positions of the some non-zero coefficients need to be indicated. In the related art, a bitmap with a size of *2LM* indicates the positions of the non-zero coefficients. For a transmission rank= *v, v* bitmaps with the size of 2LM are required, that is, a total bitmap size is *2LM×v* bits.

For a terminal moving in medium or high speed, since a channel changes rapidly in a time domain (TD), if the Rel-16/17 Type II codebook is used as precoding of the UE in a certain time range, a system performance may be reduced due to a mismatch between the channel change and the precoding. In order to solve this problem, it is determined to introduce the TD/DD basis vector on the basis of the Rel-16/17 Type II codebook to enhance the codebook. A structure of an enhanced Type II codebook may include two of:

Codebook structure 1: $W_1 \widetilde{W}_2 (W_f \otimes W_d)^H$;
Codebook structure 2: $W_1$ and $W_f$ in a codebook structure before enhancement remain unchanged, and then a plurality of $W_2$ are reported.

For the codebook structure 1, an FD basis and a DD basis may be selected independently or jointly as a vector pair composed of the FD basis and the DD basis. In particular, $W_d$ may also be an identity matrix.

Similarly, for coefficients in the combination coefficient matrix $\widetilde{W}_2$ or $W_2$ in the enhanced codebook structure based on the Rel-16/17 Type II, the number and corresponding positions of the non-zero coefficients to be reported need to be determined. At present, there is no method for determining the number of non-zero coefficients and the non-zero coefficient position indication.

There are two methods for indicating a dominant coefficient of the Rel-16 Type II. When the transmission rank v=1, the dominant coefficient is indicated by

$\lceil \log_2 K^{NZ} \rceil$ bits; when the transmission rank v>1, the dominant coefficient is indicated by $\lceil \log_2(2L) \rceil$ bits. For the Rel-17 Type II port selection codebook, a dominant coefficient is indicated by $\lceil \log_2(K_1M) \rceil$ bits. At present, there is no solution to determine the dominant coefficient for the enhanced Rel-16/17 Type II codebook.

**It** may be understood that the communication system in the embodiments of the present disclosure is used to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

The indication reporting method and apparatus in the disclosure are introduced below in detail in combination with accompanying drawings.

Please refer to FIG. 2, which is a flowchart of an indication reporting method according to an embodiment of the present disclosure. The method is performed by a terminal. As shown in FIG. 2, the method may include but is not limited to S201 to S202.

At step S201, codebook parameter information is determined, and codebook indication information corresponding to a data transmission layer is determined according to the codebook parameter information.

At step S202, the codebook indication information is sent to a network device.

The codebook indication information includes at least one of:

non-zero coefficient quantity information, in which a number of non-zero coefficients included in the non-zero coefficient quantity information is less than or equal to a maximum non-zero coefficient number, the number of non-zero coefficients is a number of non-zero coefficients of each data transmission layer or a number of non-zero coefficients of all data transmission layers, and the maximum non-zero coefficient number is a maximum non-zero coefficient number of each data transmission layer or a maximum non-zero coefficient number of all data transmission layers;
non-zero coefficient position indication information; or
dominant coefficient indication information.

In embodiments of the present disclosure, the terminal first determines the codebook parameter information, which may be provided by the network device or may be determined by the terminal itself, and determines the codebook indication information corresponding to each data transmission layer in a downlink communication according to the codebook parameter information. The downlink communication may include one or more data transmission layers.

After determining the codebook indication information, the codebook indication information is fed back to the network device, and the network device may determine precoding used for a downlink transmission according to the codebook indication information and the codebook structure, so as to facilitate the downlink communication with the terminal.

The number of non-zero coefficients is less than or equal to the maximum non-zero coefficient number. When the non-zero coefficient quantity information is used to indicate the number of non-zero coefficients of each data transmission layer, the maximum non-zero coefficient number is the maximum non-zero coefficient number of each data transmission layer. When the non-zero coefficient quantity information is used to indicate the number of non-zero coefficients of all data transmission layers, correspondingly, the maximum non-zero coefficient number is the maximum non-zero coefficient number of all data transmission layers.

The non-zero coefficient position indication information is used to indicate a position of each non-zero coefficient in the codebook.

The dominant coefficient indication information is used to indicate a position of a coefficient with a largest value in the non-zero coefficients.

Optionally, the codebook parameter information includes codebook parameter, in which the codebook parameter includes a first codebook parameter β or a second codebook parameter γ, and a first number $S_v$ of Doppler domain basis vectors DDbasis; a second number L of spatial domain basis vectors SDbasis or CSI-RS ports; and a third number $M_v$ of frequency domain basis vectors FDbasis.

A value of the transmission rank v is equal to the number of data transmission layers. The network device may configure both the first codebook parameter β and the second codebook parameter γ for the terminal, or configure one of the first codebook parameter β and the second codebook parameter γ for the terminal.

Please refer to FIG. 3, which is a flowchart of an indication reporting method according to an embodiment of the present disclosure. The method is performed by a terminal. As shown in FIG. 3, the method may include but is not limited to S301 to S302.

At step S301, a Type II codebook structure based on Doppler domain enhancement is determined according to codebook parameter information.

At step S302, codebook indication information corresponding to a data transmission layer is determined according to the Type II codebook structure based on the Doppler domain enhancement, in which the codebook indication information is configured to determine relevant information included in a combination coefficient matrix in the Type II codebook structure based on the Doppler domain enhancement.

In embodiments of the present disclosure, the network device uses the Type II codebook structure based on the Doppler domain enhancement. By adding the DD basis vectors, if the terminal determines to use the codebook structure, the terminal may determine the codebook indication information corresponding to the data transmission layer. The network device may obtain the relevant information included in the combination coefficient matrix in the Type II codebook structure based on the Doppler domain enhancement based on the codebook indication information.

In a possible embodiment, the Type II codebook structure based on the Doppler domain enhancement includes: a first codebook structure and a second codebook structure.

The first codebook structure includes:

a matrix composed of SD basis or a CSI-RS port selection matrix;
the combination coefficient matrix;
a matrix composed of FD basis; and
a matrix composed of DD basis.

The first codebook structure is $W_1\tilde{W}_2$ $(W_f \oslash W_d)^H$, in which $\widetilde{W}_2 \in \mathbb{C}^{2L \times M}$ is a combination coefficient matrix that has a matrix dimension of 2L rows and M columns and includes complex coefficients, $W_1$ is the SD basis or the CSI-RS port selection matrix, $W_f$ is the matrix composed of FD basis, and $W_d$ is the matrix composed of DD basis.

Optionally, $W_d$ represents an identity matrix.

The second codebook structure includes:

**the** matrix composed of SD basis or the CSI-RS port selection matrix;
**the** combination coefficient matrix; and
the matrix composed of FD basis.

**The** first codebook structure is $W_1\widetilde{W}_2 W_f^H$.
When an enhanced Type II codebook structure of the second codebook structure is used, the terminal may upload a plurality of matrices $W_2$ to the network device.

In this embodiment, when $N_4 > 1$ and the codebook structure is $W_1\tilde{W}_2(W_f \oslash W_d)^H$, there are four options in a method for indicating non-zero coefficients in the combination coefficient matrix $W_2$:

Alt1: $S_v$ two-dimensional bitmap indications, a size of each bitmap being $2LM_v$.
Alt 2: one two-dimensional bitmap with a size of $M_v S_v$ for indicating S FD basis-DD basis pairs selected by the UE, and one two-dimensional bitmap with a size of 2LS, in which any non-zero coefficient in each row of the 2LS corresponds to one SD basis and one FD basis-DD basis pair selected by the UE.
Alt 3: one two-dimensional bitmap with a size of $2LS_v$ for indicating $S'$ SD basis-DD basis pairs selected by the UE, and one two-dimensional bitmap with a size of $M_v S$, in which any non-zero coefficient in each row of the $M_v S$ corresponds to one FD basis and one SD basis-DD basis pair selected by the UE.
Alt 4: one two-dimensional bitmap with a size of $2LM_v$ for indicating $S''$ SD basis-FD basis pairs selected by the UE, and one two-dimensional bitmap with a size of $S_v S$, in which any non-zero coefficient in each row of the $S_v S$ corresponds to one DD basis and one SD basis-DD basis pair selected by the UE.

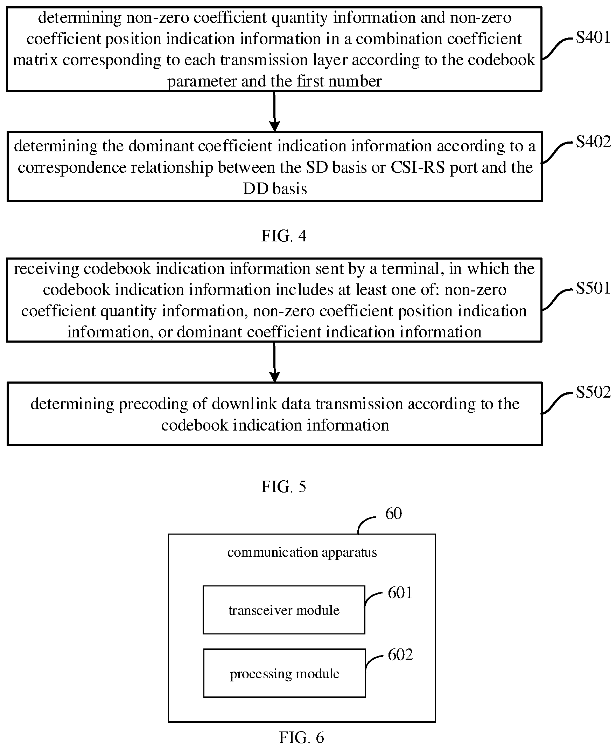

Please refer to FIG. 4, which is a flowchart of an indication reporting method according to an embodiment of the present disclosure. The method is performed by a terminal. As shown in FIG. 4, the method may include but is not limited to S401 to S402.

**At** step S401, non-zero coefficient quantity information and non-zero coefficient position indication information in a combination coefficient matrix corresponding to each transmission layer are determined according to the codebook parameter and the first number.

At step S402, the dominant coefficient indication information is determined according to a correspondence relationship between the SD basis or CSI-RS port and the DD basis.

In a possible embodiment, a codebook parameter $\beta$ is configured by the network device. The first number $S_v$ may be configured by the network device, and the terminal obtains the first number $S_v$ from the network device. Or, the terminal may also determine the first number $S_v$ by itself and report the first number $S_v$ to the network device.

The non-zero coefficient quantity information and the non-zero coefficient position indication information in the combination coefficient matrix corresponding to each transmission layer are determined according to the codebook parameter $\beta$ and the first number $S_v$; and a maximum non-zero coefficient number is determined, to ensure that the number of non-zero coefficients is less than or equal to the maximum non-zero coefficient number.

In a possible embodiment, determining the non-zero coefficient quantity information of each transmission layer according to the codebook parameter and the first number includes:
generating codebook indication information of the first codebook structure by selecting the same first number $S_v$ of DD basis for each first combination, and determining the maximum non-zero coefficient number of each transmission layer as $K_0 = \beta 2LM_v S_v$, in which the first combination includes one SD basis or CSI-RS port and one FD basis.

**In** embodiments of the present disclosure, an antenna includes two polarization directions, so the polarization directions of the antenna should be taken into account when determining the maximum non-zero coefficient number. When the DDbasis is selected, the SDbasis or the CSI-RS port, the FD basis and the polarization directions of the antenna are independent of each other. Same $S_v$ DDbasis are selected for each first combination, so there are $2LM_vS_v$ first combinations corresponding to $S_v$ DDbasis, and then the maximum non-zero coefficient number $K_0$ of each transmission layer may be obtained by multiplying the $2LM_vS_v$ by the codebook parameter β. The number of non-zero coefficients reported by the terminal is determined by the terminal according to downlink channel information, and the number is not greater than the maximum non-zero coefficient number.

In a possible embodiment, determining the maximum non-zero coefficient quantity information of each transmission layer according to the codebook parameter and the first number includes:

determining a fourth number $M_v'$ of FD basis-DD basis pairs corresponding to the SDbasis or CSI-RS port; and
generating codebook indication information of the first codebook structure by selecting the same fourth number $M_v'$ of FD basis-DD basis pairs for each SDbasis or CSI-RS port, and determining the maximum non-zero coefficient number of each transmission layer as $K_0 = \beta 2LM_v'$.

In embodiments of the present disclosure, there is a one-to-one correspondence relationship between the FD basis and the DD basis, and one FD basis may only correspond to one unique DD basis. The antenna includes two polarization directions, so the polarization directions of the antenna should be taken into account when determining the maximum non-zero coefficient number. When the FD basis-DD basis pair is selected, the SDbasis or the CSI-RS port, and the polarization directions of the antenna are independent of each other. Same $M_v'$ FD basis-DD basis pairs are selected for each SDbasis or CSI-RS port, so there are $2LM_v'$ SDbasis or CSI-RS ports corresponding to the $M_v'$ FD basis-DD basis pairs, and then the maximum non-zero coefficient number $K_0$ of each transmission layer may be obtained by multiplying the $2LM_v'$ by the codebook parameter β.

In a possible embodiment, determining the non-zero coefficient quantity information of each transmission layer according to the codebook parameter and the first number includes:
in response to the matrix composed of DD basis in the first codebook structure being an identity matrix, determining the maximum non-zero coefficient number as $K_0 = N * \beta 2LM_v$, in which N is an order of the identity matrix.

According to an analysis of the first codebook structure, when the matrix composed of DD basis is an identity matrix, that is, when $W_d$ represents the identity matrix, the first codebook structure is equivalent to a second codebook structure, and the order of $W_d$ is N, that is, N pieces of codebook indication information need to be generated. N pieces of codebook indication information include N pieces of non-zero coefficient quantity information, and each non-zero coefficient quantity information is less than its corresponding $N * \beta 2LM_v$.

In a possible embodiment, determining the non-zero coefficient quantity information of each transmission layer according to the codebook parameter and the first number includes:

determining a fifteenth number $S'$ of SD basis-DD basis pairs corresponding to the FDbasis; and
generating codebook indication information of the first codebook structure by selecting the same fifteenth number $S'$ of SD basis-DD basis pairs for each FDbasis, and determining the maximum non-zero coefficient number of each transmission layer as $K_0 = \gamma M_v S'$.

In embodiments of the present disclosure, there is a one-to-one correspondence relationship between the SD basis or the CSI-RS port and the DD basis, and one SD basis may only correspond to one unique DD basis. When the SD basis-DD basis pair is selected, same $S'$ SD basis-DD basis pairs are selected for each FDbasis, so there are $M_v S'$ FDbasis corresponding to the $S'$ SD basis-DD basis pairs, and then the maximum non-zero coefficient number $K_0$ of each transmission layer may be obtained by multiplying the $M_v S'$ by the codebook parameter $\gamma$.

In a possible embodiment, determining the non-zero coefficient quantity information of each transmission layer according to the codebook parameter and the first number includes:

determining a sixteenth number $S''$ of SD basis-DD basis pairs corresponding to the DDbasis; and
generating codebook indication information of the first codebook structure by selecting the same sixteenth number $S''$ of SD basis-DD basis pairs for each DDbasis, and determining the maximum non-zero coefficient number of each transmission layer as $K_0 = \gamma S_v S''$.

In embodiments of the present disclosure, there is a one-to-one correspondence relationship between the SD basis or the CSI-RS port and the FD basis, and one SD basis may only correspond to one unique FD basis. When the SD basis-FD basis pair is selected, same $S''$ SD basis-FD basis pairs are selected for each DDbasis, so there are $S_v S''$ DDbasis corresponding to the $S''$ SD basis-DD basis pairs, and then the maximum non-zero coefficient number $K_0$ of each transmission layer may be obtained by multiplying the $S_v S''$ by the codebook parameter $\gamma$.

In a possible embodiment, determining the non-zero coefficient quantity information of each transmission layer according to the codebook parameter and the first number includes:

**in** response to the codebook indication information adopting the second codebook structure, generating a plurality pieces of the codebook indication information, and determining the maximum non-zero coefficient number corresponding to each combination coefficient matrix in the codebook indication information as $K_0 = \beta 2LM_v$, in which the codebook indication information includes a plurality of different combination coefficient matrices.

In embodiments of the present disclosure, multiple pieces of codebook indication information are needed to be generated, in which the multiple pieces of codebook indication information include a corresponding number of pieces of non-zero coefficient quantity information, and each non-zero coefficient quantity information may be less than a corresponding $\beta 2LM_v$. $\beta 2LM_v$ corresponds to a maximum non-zero coefficient number of one matrix $W_2$ in combination coefficient matrices of the codebook structure 2.

In a possible embodiment, determining the non-zero coefficient quantity information of each transmission layer according to the codebook parameter and the first number includes:

determining a fifth number $S_{l,v}$ of DD basis corresponding to each first combination, in which the first combination includes one SDbasis or CSI-RS port and one FD basis; and
determining the maximum non-zero coefficient number of each transmission layer as

$$K_0 = \beta \sum_{l=1}^{2LM_v} S_{l,v}$$ , in which $l$ is an index of the first combination.

In embodiments of the present disclosure, a plurality of DD basis corresponding to each first combination are selected respectively to form a codebook of the first structure, and the number of DD basis selected for each first combination and the DD basis selected may be different. $S_{l,v}$ is the number of DD basis corresponding to an l-th first combination. There are $2LM_v$ first combinations in total. The maximum non-zero coefficient number of each transmission layer may be obtained as

$$K_0 = \beta \sum_{l=1}^{2LM_v} S_{l,v}$$ by accumulating DD basis corresponding to respective first combinations.

In a possible embodiment, determining the non-zero coefficient quantity information of each transmission layer according to the codebook parameter and the first number includes:

determining a sixth number $M'_{l',v}$ of FD basis-DD basis pairs corresponding to each SDbasis or CSI-RS port; and
generating codebook indication information of the first codebook structure by selecting the sixth number $M'_{l',v}$ of FD basis-DD basis pairs corresponding to each SDbasis or CSI-RS port, and determining the maximum non-zero coefficient number of each transmission layer as

$$K_0 = \beta \sum_{l=1}^{2L} M'_{l',v}$$ , in which $l'$ is an index of the SDbasis or CSI-RS port.

In embodiments of the present disclosure, a plurality of FD basis-DD basis pairs corresponding to each SDbasis or CSI-RS port are respectively selected to form the codebook of the first structure. The number of FD basis-DD basis pairs and the FD basis-DD basis pairs selected for each SDbasis or CSI-RS port may be different. $S_{l,v}$ represents the number of FD basis-DD basis pairs corresponding to an l-th SDbasis or CSI-RS port. There are 2L SDbasis or CSI-RS ports in total. The maximum non-zero coefficient number of each transmission layer may be obtained as $K_0 = \beta \sum_{l=1}^{2L} M'_{l',v}$ by accumulating the FD basis-DD basis pairs corresponding to respective first combinations, in which the number of non-zero coefficients is less than or equal to the maximum non-zero coefficient number.

In a possible embodiment, determining the non-zero coefficient quantity information of each transmission layer according to the codebook parameter and the first number includes:

**in** response to DD basis corresponding to each antenna polarization direction being same, determining a seventh number $S'_{l,v}$ of DD basis corresponding to each first combination, in which the first combination includes one SDbasis or CSI-RS port and one FD basis; and
generating codebook indication information of the first codebook structure by selecting the seventh number $S'_{l,v}$ of DD basis corresponding to each first combination, and determining the maximum non-zero coefficient number of each transmission layer as $K_0 = 2\beta \sum_{l=1}^{LM_v} S'_{l,v}$ , in which $l$ is an index of a third combination.

In embodiments of the present disclosure, for the first combination, the same DD basis is selected in two polarization directions. $S'_{l,v}$ represents the number of DD basis selected for an l-th first combination. There are $LM_v$ first combinations in total. The maximum non-zero coefficient number of each transmission layer may be obtained as $K_0 = 2\beta \sum_{l=1}^{LM_v} S'_{l,v}$ by accumulating the number of DD basis corresponding to each first combination, and then multiplying by the number 2 of polarization directions, in which the number of non-zero coefficients selected by the terminal is less than or equal to the maximum non-zero coefficient number.

In a possible embodiment, determining the non-zero coefficient quantity information of each transmission layer according to the codebook parameter and the first number includes:

in response to the DD basis corresponding to each antenna polarization direction being same, determining an eighth number $M''_{l',v}$ of FD basis-DD basis pairs corresponding to each SD basis or CSI-RS port; and
generating codebook indication information of the first codebook structure by selecting the eighth number $M''_{l',v}$ of FD basis-DD basis pairs corresponding to each SD basis or CSI-RS port, and determining the maximum non-zero coefficient number of each transmission layer as $K_0 = 2\beta \sum_{l=1}^{L} M''_{l',v}$, in which $l'$ is an index of the SD basis or CSI-RS port.

In embodiments of the present disclosure, for the SD basis or CSI-RS port, the same FD basis-DD basis pair is selected in two polarization directions to generate the codebook indication information of the first codebook structure. $M''_{l',v}$ represents the number of FD basis-DD basis pairs selected for an $l'$-th SD basis or CSI-RS port. There are L SD basis or CSI-RS ports in total. The maximum non-zero coefficient number of each transmission layer may be obtained as $K_0 = 2\beta \sum_{l=1}^{L} M''_{l',v}$ by accumulating the number of the FD basis-DD basis pairs corresponding to each SD basis or CSI-RS port and then multiplying by the number 2 of polarization directions, in which the number of non-zero coefficients selected by the terminal is less than or equal to the maximum non-zero coefficient number.

In a possible embodiment, the method further includes:
determining a ninth number S, and selecting a bitmap with a size of $2LM_vS$ according to the ninth number S to indicate the non-zero coefficient position indication information.

In embodiments of the present disclosure, after determining the number of the non-zero coefficients, a bitmap of a certain size is needed to be generated to indicate the non-zero coefficient position indication information to the network device, including the position of each non-zero coefficient. If the same DD basis is selected for the first combinations, the same bitmap is needed to indicate the non-zero coefficient position indication information for all first combinations. S represents the number of DD basis selected for each first combination. There are $2LM_v$ first combinations, so the non-zero coefficient position indication information needs to be indicated by the bitmap with the size of $2LM_vS$. This embodiment is the above option Alt1 in the method for indicating non-zero coefficients in the combination coefficient matrix.

In a possible embodiment, the method further includes:
determining a tenth number $M'$, and selecting a bitmap with a size of $2LM'$ according to the tenth number $M'$ to indicate the non-zero coefficient position indication information.

In embodiments of the present disclosure, in response to selecting the same fourth number of FD basis-DD basis pairs for each SDbasis or CSI-RS port described above, for all SDbasis or CSI-RS ports, the same bitmap is needed to indicate the non-zero coefficient position indication information. $M'$ represents the number of FD basis-DD basis pairs selected by each SDbasis or CSI-RS port. There are 2L SDbasis or CSI-RS ports, so the non-zero coefficient position indication information needs to be indicated by the bitmap with the size of $2LM'$. This embodiment is the above option Alt2 in the method for indicating non-zero coefficients in the combination coefficient matrix.

In a possible embodiment, the method further includes:
determining an eleventh number $S_l$, and selecting a bitmap with a size of $\sum_{l=1}^{2LM_v} S_l$ or $2\sum_{l=1}^{LM_v} S'_{l,v}$ according to the eleventh number $S_l$ to indicate the non-zero coefficient position indication information.

In embodiments of the present disclosure, different DD basis may be selected for different first combinations, then different bitmaps are required for different first combinations to indicate the non-zero coefficient position indication information. $S_l$ represents the number of DD basis selected for each first combination. There are $2LM_v$ first combinations, so the non-zero coefficient position indication information needs to be indicated by the bitmap with the size of $\sum_{l=1}^{2LM_v} S_l$.

Optionally, different DD basis may be selected for different first combinations, and for each first combination, the same DD basis is selected in the two antenna directions, so different bitmaps are required for different first combination to indicate the non-zero coefficient position indication information. $S_l$ is the number of DD basis selected for each first combination. There are $2LM_v$ first combinations, so the non-zero coefficient position indication information needs to be indicated by the bitmap with the size of $2\sum_{l=1}^{LM_v} S'_{l,v}$.

In a possible embodiment, the method further includes:

determining a twelfth number $M_l'$, and selecting a bitmap with a size of $\sum_{l=1}^{2L} M_l'$ or $2\sum_{l=1}^{L} M_{l',v}''$ according to the twelfth number $M_l'$ to indicate the non-zero coefficient position indication information.

In embodiments of the present disclosure, different FD basis-DD basis pairs may be selected for different SD basis or CSI-RS ports, and then different bitmaps are required for different SD basis or CSI-RS ports to indicate the non-zero coefficient position indication information. $M_l'$ represents the number of FD basis-DD basis pairs selected for each SD basis or CSI-RS port. There are $M_l'$ SD basis or CSI-RS ports, so the non-zero coefficient position indication information needs to be indicated by the bitmap with the size of $\sum_{l=1}^{2L} M_l'$.

Optionally, different DD basis may be selected for different SD basis or CSI-RS ports, and for each SD basis or CSI-RS port, the same FD basis-DD basis pair is selected in two antenna directions. For each SD basis or CSI-RS port, the non-zero coefficient position indication information needs to be indicated by different bitmaps. $S_l$ represents the number of FD basis-DD basis pairs selected for each SD basis or CSI-RS port. There are $2LM_v$ SD basis or CSI-RS ports, so the non-zero coefficient position indication information needs to be indicated by the bitmap with the size of $2\sum_{l=1}^{L} M_{l',v}''$

In a possible embodiment, the method further includes:

selecting a bitmap with a size of $2L \times M_v$ according to the order N of the identity matrix to indicate the non-zero coefficient position indication information.

In embodiments of the present disclosure, when $W_d$ represents an identity matrix, the bitmap with the size of $2L \times M_v$ is selected to indicate the non-zero coefficient position indication information.

In a possible embodiment, the method further includes:

in response to the second codebook structure including a thirteenth number $N'$ of combination coefficient matrices, for each combination coefficient matrix, selecting a bitmap with a size of $2L \times M_v$ according to the third number to indicate the non-zero coefficient position indication information.

In a possible embodiment, the method further includes:

selecting a bitmap with a size of $M_vS'$ to indicate the non-zero coefficient position indication information.

This embodiment is aimed at the non-zero coefficient position indication information in response to selecting the same fifteenth number of SD basis-DD basis pairs for each FDbasis to generate the codebook indication information of the first codebook structure. This embodiment is the above option Alt3 in the method for indicating non-zero coefficients in the combination coefficient matrix.

In a possible embodiment, the method further includes:

selecting a bitmap with a size of $S_vS''$ to indicate the non-zero coefficient position indication information.

This embodiment is aimed at the non-zero coefficient position indication information in response to selecting the same sixteenth number of SD basis-FD basis pairs for each DDbasis to generate the codebook indication information of the first codebook structure. This embodiment is the above option Alt4 in the method for indicating non-zero coefficients in the combination coefficient matrix.

**In** a possible embodiment, determining the maximum non-zero coefficient quantity information of each transmission layer according to the codebook para-meter $\beta$ and the first number includes one of:

> **in** response to a transmission rank $v$ being greater than 1, determining that a total number of non-zero coefficients is less than or equal to $2K_0$; or
> **in** response to a transmission rank $v$ being greater than 1, determining that a total number of non-zero coefficients is less than or equal to $K_0 * v$, in which the number of the data transmission layers is determined by the transmission rank $v$.

In the embodiments of the present disclosure, when a downlink transmission includes a plurality of data transmission layers and the first codebook structure is used, a maximum non-zero coefficient number of all data transmission layers may be determined as $2K_0$, in which $K_0$ represents a maximum non-zero coefficient number of one of the data transmission layers.

Optionally, when the downlink transmission includes the plurality of data transmission layers and the first codebook structure is used, the maximum non-zero coefficient number of all data transmission layers may be determined as $K_0 * v$, in which $K_0$ represents the max-imum non-zero coefficient number of one of the data transmission layers.

**In** a possible embodiment, determining the maximum non-zero coefficient quantity information of each transmission layer according to the codebook para-meter $\beta$ and the first number includes:

in response to a transmission rank v being greater than 1, determining that a total number of non-zero coefficients is less than or equal to $2K_0 * N$.

In the embodiments of the present disclosure, when the downlink transmission includes the plurality of data transmission layers and the first codebook structure is used, and $W_d$ represents an identity matrix, the maximum non-zero coefficient number of all data transmission layers may be determined as $K_0 * v$, in which $K_0$ represents the maximum non-zero coefficient number of one of the data transmission layers.

Optionally, when the downlink transmission includes the plurality of data transmission layers and the second codebook structure is used, the maximum non-zero coefficient number of all data transmission layers may be determined as $K_0 * v$, in which $K_0$ represents the maximum non-zero coefficient number of one of the data transmission layers.

In a possible embodiment, the method further includes:

> each data transmission layer adopting the same bitmap to indicate the non-zero coefficient position indication information; or
> each data transmission layer adopting a bitmap of its own layer to indicate the non-zero coefficient position indication information; or
> dividing the data transmission layers into transmission layer groups, in which data transmission layers in each transmission layer group adopt the same bitmap to indicate the non-zero coefficient position indication information.

In the embodiments of the present disclosure, when the plurality of data transmission layers are included in the downlink transmission, a size of the bitmap of each layer may be obtained by the above method to indicate the non-zero coefficient position indication information.

Optionally, in response to $\beta=1$ or $\gamma=1$, the non-zero coefficient position indication information is not reported.

In this embodiment, in response to $\beta=1$ or $\gamma=1$, it is indicated that all coefficients of a corresponding transmission layer are reported, and the non-zero coefficient position indication information is not reported.

Optionally, for each data transmission layer, bitmaps with the same size may be used to indicate the non-zero coefficient position indication information.

Optionally, the data transmission layers may be divided into a plurality of transmission layer groups, in which each transmission layer group includes one or more data transmission layers. The data transmission layers in each transmission layer group adopt the same bitmap to indicate the non-zero coefficient position indication information.

In a possible embodiment, determining the dominant coefficient indication information includes:
indicating the dominant coefficient indication information by information of $\log_2 2L$ bits.

In embodiments of the present disclosure, the dominant coefficient indication information is used to indicate a position of a non-zero coefficient with a maximum value in the non-zero coefficients. When the same DD basis is selected for all SD basis, the dominant coefficient indication information is indicated by the in-

formation of $\lceil \log_2 2L \rceil$ bits, and $\lceil \log_2 2L \rceil$ represents a ceiling of $\log_2 2L$. In the codebook after a mathematical operation, the dominant coefficient may be shifted to a first column, so the size of the bitmap used to indicate the dominant coefficient is only related to the number L of SD basis.

In one possible embodiment, in which determining the dominant coefficient indication information includes:
determining a size $K$ of a bitmap for indicating the non-zero coefficient position indication information, and indicating the dominant coefficient indication information by information of $\lceil \log_2 K \rceil$ bits based on the size $K$ of the bitmap.

In embodiments of the present disclosure, for each SD basis, when the DD basis is selected independently, the size K of the bitmap of the non-zero coefficient position indication information corresponding to each data transmission layer is firstly determined, and the dominant coefficient indication information is indicated by the information of $\lceil \log_2 K \rceil$ bits, in which the $\lceil \log_2 K \rceil$ represents a ceiling of $\log_2 K$.

In a possible embodiment, determining the dominant coefficient indication information includes:
indicating a dominant coefficient of the data transmission layer by information of $\lceil \log_2 K' \rceil$ bits, in which $K'$ represents the maximum non-zero coefficient number or the number of non-zero coefficients corresponding to the data transmission layer.

In embodiments of the present disclosure, the maximum non-zero coefficient number or the number of non-zero coefficients $K'$ corresponding to each data transmission layer is firstly determined, the dominant coefficient indication information is indicated by the information of $\lceil \log_2 K' \rceil$ bits, in which the $\lceil \log_2 K' \rceil$ represents a ceiling of $\log_2 K'$.

In a possible embodiment, determining the dominant coefficient indication information includes:

> reporting $N$ or $N'$ dominant coefficients, in which the dominant coefficient is indicated by one of following methods:
> indicating the dominant coefficient indication information by information of $\lceil \log_2 2L \rceil$ bits; or
> determining a size $K$ of a bitmap for indicating the non-zero coefficient position indication information, and indicating the dominant coefficient indication information by information of $\lceil \log_2 K \rceil$ bits based on the size $K$ of the bitmap.

In embodiments of the present disclosure, a codebook with the first codebook structure is used, in which $W_d$ represents an identity matrix and an order of the identity matrix is N. Then N dominant coefficients need to be reported, and any one of indication methods for the dominant coefficient may be arbitrarily selected.

In a possible embodiment, determining the dominant coefficient indication information includes:

indicating the dominant coefficient indication information by information of $\lceil \log_2 2LM_v' \rceil$ bits; or indicating the dominant coefficient indication information by information of

$$\lceil log_2 2L \rceil + \lceil log_2 M_v Q \rceil$$ bits.

In this embodiment, in response to selecting the same fourth number of FD basis-DD basis pairs for each SD basis or CSI-RS port to generate the codebook indication information of the first codebook structure, the bitmap of the above size is used to indicate the dominant coefficient indication information. In this embodiment, the method for indicating non-zero coefficients in the combination coefficient matrix is the option Alt2.

In a possible embodiment, determining the dominant coefficient indication information includes:

indicating the dominant coefficient indication information by information of $\lceil \log_2 M_v S' \rceil$ bits; or indicating the dominant coefficient indication information by information of

$$\lceil log_2 M_v \rceil + \lceil log_2 2LS_v \rceil$$ bits; or

indicating the dominant coefficient indication information by information of $\lceil \log_2 M_v \rceil$ bits.

In this embodiment, in response to selecting the same fifteenth number of SD basis-DD basis pairs for each FDbasis to generate the codebook indication information of the first codebook structure, the bitmap of the above size is used to indicate the dominant coefficient indication information. In this embodiment, the method for indicating non-zero coefficients in the combination coefficient matrix is the option Alt3.

**In** a possible embodiment, determining the dominant coefficient indication information includes:

indicating the dominant coefficient indication information by information of $\lceil log_2 S_v S'' \rceil$ bits; or indicating the dominant coefficient indication information by information of $\lceil log_2 S_v \rceil + \lceil log_2 2LM_v \rceil$ bits; or indicating the dominant coefficient indication information by information of $\lceil log_2 S_v \rceil$ bits.

In this embodiment, in response to selecting the same sixteenth number of SD basis-DD basis pairs for each DDbasis to generate the codebook indication information of the first codebook structure, the bitmap of the above size is used to indicate the dominant coefficient indication information. In this embodiment, the method for indicating non-zero coefficients in the combination coefficient matrix is the option Alt4.

Optionally, a codebook with the second codebook structure is used, and N' combination coefficient matrices are uploaded. Then N' dominant coefficients need to be reported, and any one of indication methods for the dominant coefficient may be arbitrarily selected.

In a possible embodiment, the first number $S_v$ of DDbasis, the second number L of SDbasis or CSI-RS ports, the third number $M_v$ of FDbasis, and the transmission rank v are determined according to configuration indication of the network device or determined by the terminal.

In a possible embodiment, the codebook parameter $\beta$ is determined by configuration of the network device.

In a possible embodiment, the method further includes:

reporting the codebook parameter information determined by the terminal.

Please refer to FIG. 5, which is a flowchart of an indication reporting method according to an embodiment of the present disclosure. The method is performed by a network device. As shown in FIG. 5, the method may include but is not limited to S501 to S502.

At step S501, codebook indication information sent by a terminal is received, in which the codebook indication information includes at least one of: non-zero coefficient quantity information, non-zero coefficient position indication information, or dominant coefficient indication information.

At step S502, precoding of downlink data transmission is determined according to the codebook indication information.

In a possible embodiment, a transmission rank v is 1.

Assuming that a gNB configures for the UE a DD basis whose length is $N_4 = 8$ and a second codebook parameter $\gamma=0.25$ for determining the number of DD basis, the number of DD basis is $S_v=\gamma N_4 = 2$. Furthermore, the gNB configures for the UE a second number $L=2$ of SDbasis or CSI-RS ports, a third number $M_v=4$ of FDbasis, and a first codebook parameter $\beta=0.5$ for determining the number of non-zero coefficients. If the UE selects same $S_v$ DD basis for all SD basis and FD basis, a maximum non-zero coefficient number is $K_0 = \beta 2LM_v S_v = 16$.

The UE needs to report positions of the non-zero coefficients, and non-zero coefficient position indication may be indicated as shown in Table 1.

Table 1

| 0 | 0 | 1 | 0 | 0 | 1 | 0 | 0 |
|---|---|---|---|---|---|---|---|
| 1 | 1 | 0 | 1 | 1 | 0 | 1 | 1 |
| 0 | 0 | 1 | 0 | 0 | 1 | 1 | 0 |
| 0 | 1 | 1 | 1 | 1 | 0 | 0 | 1 |

**In** Table 1, 0 represents that a coefficient at a corresponding position is a zero coefficient, and 1 represents a coefficient at a corresponding position is a non-zero coefficient. There are two antenna polarization directions: a first polarization direction and a second polarization direction. The first two rows in the table correspond to non-zero coefficient indication in the first polarization direction, and remaining rows correspond to non-zero coefficient indication in the second polarization direction.

Optionally, if non-zero coefficient positions in the two polarization directions are predefined to be identical, the UE only reports non-zero coefficients in one polarization direction. Taking Table 1 as an example, assuming that the dominant coefficient is located in the first polarization direction, for example, a position in the second row and first column of Table 1 is a dominant coefficient position.

Table 2

| 0 | 0 | 1 | 0 | 0 | 1 | 0 | 0 |
|---|---|---|---|---|---|---|---|
| 1 | 1 | 0 | 1 | 1 | 0 | 1 | 1 |

As shown in Table 2, when the non-zero coefficient positions in the two polarization directions are identical, the UE only reports the non-zero coefficient indication in the first polarization direction, and the gNB may obtain non-zero coefficient positions of the entire combination coefficient matrix based on non-zero coefficient indication information.

**If** the same DDbasis is selected for all SD basis, the position of the dominant coefficient may be indicated via $\lceil \log_2 2L \rceil = 2$ bits. The gNB determines precoding of downlink data transmission through the codebook structure 1 or the codebook structure 2 according to the non-zero coefficient positions and the dominant coefficient indication information.

In a possible embodiment, a transmission rank $v$ is greater than 1.

Assuming that the gNB configures, for the UE, the number SDbasis, the number of FD basis, and the number of DD basis to be L=2, $M_v$=2 and $S_v$=2, respectively, and configures the first codebook parameter $\beta$=0.5 for determining the number of non-zero coefficients, the number of non-zero coefficients is $K_0 = \beta 2LM_v S_v = 8$. If a data transmission rank is $v$=2, the maximum non-zero coefficient number reported by the UE may not exceed $2K_0$.

Similarly, the UE also needs to report the non-zero coefficient indication information to indicate non-zero coefficient position information corresponding to $v$ transmission layers. When the non-zero coefficient position information corresponding to $v$ transmission layers is predefined to be identical, only one bitmap needs to be reported to indicate non-zero coefficient positions of all layers. In this example, it is assumed that the UE reports a bitmap for a first transmission layer.

Table 3

| 0 | 1 | 1 | 0 |
|---|---|---|---|
| 1 | 0 | 0 | 1 |
| 0 | 1 | 1 | 0 |
| 1 | 0 | 1 | 0 |

As shown in Table 3, the gNB may determine non-zero coefficient positions of remaining transmission layers according to bitmap indication.

Optionally, the UE may still report non-zero coefficient indications of two transmission layers. However, for each transmission layer, the non-zero coefficient position indications in the two polarization directions are identical, as shown in Tables 4 and 5.

Table 4

| 0 | 1 | 1 | 0 |
|---|---|---|---|
| 1 | 0 | 0 | 1 |

Table 5

| 1 | 0 | 1 | 0 |
|---|---|---|---|
| 0 | 1 | 0 | 1 |

A position in the second row and first column in Table 4 is a position of the dominant coefficient, and a position in the first row and first column in Table 5 is also a position of the dominant coefficient. The gNB may determine non-zero coefficient positions of combination coefficients of the two layers according to one polarized bitmap indication of the two layers. Compared to a conventional method in which a bitmap with a size of $2LM_v S_v$ needs to be reported for each transmission layer, this method reduces a feedback overhead by half.

In a possible embodiment, for the data transmission layer l=1, the gNB configures, for the UE, the number of SDbasis, the number of FD basis, and the number of DD basis to be L=2, $M_v$=4 and $S_v$=2, respectively, and configures the second codebook parameter $\gamma$=1 for determining the number of non-zero coefficients. The UE selects $S'$=5 SD basis-DD basis pairs according to downlink channel information. The selected SD basis-DD basis pairs are indicated via a two-dimensional bitmap with a size of $2LS_v$, which is shown in Table 6.

Table 6

| 0 | 1 |
|---|---|
| 1 | 0 |
| 0 | 1 |
| 1 | 1 |

According to network-configured parameters and $S'$ SD basis-DD basis pairs selected by the UE, the number of non-zero coefficients corresponding to the data transmission layer is $K_0 = yM_yS' = 20$. Since $\gamma = 1$, that is, all non-zero coefficients are reported, in this case, positions of the non-zero coefficients need not to be reported and indicated by the UE, which reduces a feedback overhead by 20 bits. Correspondingly, positions of dominant coefficients corresponding to this layer are reported via a bitmap of $\lceil \log_2 M_v S \rceil = 5 \text{ bits}$. In the embodiments provided by the present disclosure, the method in the embodiments of the present disclosure is described from perspectives of the network device and the terminal, respectively. To perform functions of the methods provided in the above embodiments, the network device and the terminal may include a hardware structure and a software module, and realize the above functions with the hardware structure, the software module, or a combination of the hardware structure and the software module. A specific function may be performed as the hardware structure, the software module, or the hardware structure plus the software module.

Please refer to FIG. 6, which a block diagram of a communication apparatus 60 according to an embodiment of the present disclosure. The communication apparatus 60 shown in FIG. 6 may include a transceiver module 601 and a processing module 602. The transceiver module 601 may include a sending module and/or a receiving module, in which the sending module is used to achieve a sending function, and the receiving module is used to achieve a receiving function. The transceiver module 601 may achieve the sending function and/or the receiving function.

The communication apparatus 60 may be a terminal (such as the terminal in the above method embodiments), an apparatus in a terminal, or an apparatus capable of being used in combination with a terminal. Or, the communication apparatus 60 may be a network device, an apparatus in a network device, or an apparatus capable of being used in combination with a network device.

The communication apparatus 60 may be a terminal, including:

> a processing module, configured to determine codebook parameter information, and determine codebook indication information corresponding to a data transmission layer according to the codebook parameter information; and
a transceiver module, configured to send the codebook indication information to a network device;
in which the codebook indication information includes at least one of:

> non-zero coefficient quantity information, in which a number of non-zero coefficients included in the non-zero coefficient quantity information is less than or equal to a maximum non-zero coefficient number, the number of non-zero coefficients is a number of non-zero coefficients of each data transmission layer or a number of non-zero coefficients of all data transmission layers, and the maximum non-zero coefficient number is a maximum non-zero coefficient number of each data transmission layer or a maximum non-zero coefficient number of all data transmission layers;
> non-zero coefficient position indication information; or
> dominant coefficient indication information.

The communication apparatus 60 may be a network device, including:

> a transceiver module, configured to receive codebook indication information sent by a terminal, in which the codebook indication information includes at least one of: non-zero coefficient quantity information, non-zero coefficient position indication information, or dominant coefficient indication information; and
> a processing module, configured to determine precoding of downlink data transmission according to the codebook indication information.

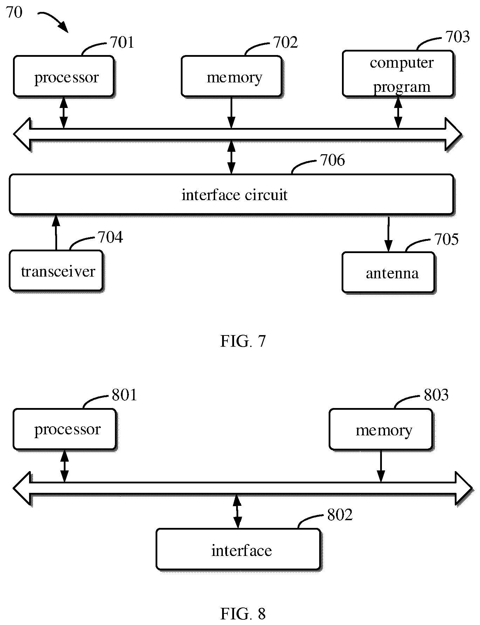

Please refer to FIG. 7, which is a block diagram of another communication apparatus 70 according to the embodiments of the present disclosure. The communication apparatus 70 may be a network device, a terminal (such as the terminal in the above method embodiments), a chip, a chip system, a processor, etc. that supports the network device to implement the method, or a chip, a chip system, a processor, etc. that supports the terminal to implement the method. The apparatus may be used to implement the method in the above method embodiments. For details, please refer to the above method embodiments.

The communication apparatus 70 may include one or more processors 701. The processor 701 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 70 may also include one or more memories 702 for storing the computer program 703. When the processor 701 executes the computer program 703, the communication apparatus 70 is caused to implement the method in the above method embodiments. Optionally, the memory 702 may also store data. The communication apparatus 70 and the memory 702 may be set up separately or integrated together.

Optionally, the communication apparatus 70 may also include a transceiver 704 and an antenna 705. The transceiver 704 may be called a transceiver unit, a transceiver machine, or a transceiver circuit, etc., to perform the receiving and sending function. The transceiver 704 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 70 may also include one or more interface circuits 706. The interface circuit 706 is used to receive code instructions and transmit the code instructions to the processor 701. The processor 701 runs the code instructions to cause the communication apparatus 70 to implement the method in the above method embodiments.

In one implementation, the processor 701 may include a transceiver for performing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 701 may store a computer program 703. When the computer program 703 is running on the processor 701, the communication apparatus 70 is caused to implement the method in the above method embodiments. The computer program 703 may be solidified in the processor 701, in which case the processor 701 may be implemented in hardware.

In an implementation, the communication apparatus 70 includes a circuit that may perform the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus/device in the above embodiments may be a network device or a terminal (such as the terminal in the method embodiments), but the scope of the communication apparatus in the disclosure is not limited to this, and the structure of the communication apparatus may not be restricted by FIG. 7. The communication apparatus may be an independent device or part of a larger device. For example, the communication apparatus may be:

> (1) an independent IC, or a chip, or a chip system or a subsystem;
> (2) a collection including one or more IC, optionally, the IC collection may also include storage components for storing data and computer programs;
> (3) an ASIC, such as a modem;
> (4) modules embedded in other devices;
> (5) a receiver, a terminal, an intelligent terminal, a cellular phone, a wireless device, a handheld phone, a mobile unit, a vehicle-mounted device, a network device, a cloud device, an artificial intelligence device, etc.;
> (6) others.

For the case where the communication apparatus may be a chip or a chip system, please refer to the block diagram of a chip in FIG. 8. The chip shown in FIG. 8 includes a processor 801 and an interface 803. There may be one or more processors 801, and there may be one or more interfaces 803.

For the case where the chip is used to perform the functions of the terminal (such as the terminal in the above method embodiments) in the embodiments of the present disclosure:
Optionally, the chip also includes a memory 803, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, an indication reporting system is also provided. The communication system includes the communication apparatus in the FIG. 6 as a terminal (such as the terminal in the above method embodiments) and the communication apparatus as a network device, or the communication system includes the communication apparatus in the FIG. 7 as a terminal (such as the terminal in the above method embodiments) and the communication apparatus as a network device.

In the present disclosure, a readable storage medium for storing instructions is provided. When the instructions are executed by a computer, the function of any one of the above method embodiments is performed.

In the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Correspondence relationships indicated by tables in the present disclosure may be configured or predefined. Values of information in the tables are only examples, and may be configured as other values, which are not limited in the disclosure. When the correspondence relationship between information and parameters is configured, it is not always necessary to configure all correspondence relationships indicated in tables. For example, in the tables of the present disclosure, correspondence relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, prestored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

**Claims**

1. An indication reporting method, performed by a terminal, comprising:

    determining codebook parameter information, and determining codebook indication information corresponding to a data transmission layer according to the codebook parameter information; and

sending the codebook indication information to a network device,

wherein the codebook indication information comprises at least one of:

    non-zero coefficient quantity information, wherein a number of non-zero coefficients included in the non-zero coefficient quantity information is less than or equal to a maximum non-zero coefficient number, the number of non-zero coefficients is a number of non-zero coefficients of each data transmission layer or a number of non-zero coefficients of all data transmission layers, and the maximum non-zero coefficient number is a maximum non-zero coefficient number of each data transmission layer or a maximum non-zero coefficient number of all data transmission layers;
    non-zero coefficient position indication information; or
    dominant coefficient indication information.

2. The method of claim 1, wherein the codebook parameter information comprises codebook parameter comprising a first codebook parameter $\beta$ or a second codebook parameter $\gamma$, a first number $S_v$ of Doppler domain basis vectors DDbasis; a second number L of spatial domain basis vectors SDbasis or channel status information-reference signal (CSI-RS) ports; and a third number $M_v$ of frequency domain basis vectors FDbasis.

3. The method of claim 2, wherein determining the codebook indication information corresponding to the data transmission layer according to the codebook parameter information comprises:

    determining a Type II codebook structure based on Doppler domain enhancement according to the codebook parameter information; and
    determining the codebook indication information corresponding to the data transmission layer according to the Type II codebook structure based on the Doppler domain enhancement, wherein the codebook indication information is used to determine relevant information included in a combination coefficient matrix in the Type II codebook structure based on the Doppler domain enhancement.

4. The method of claim 3, wherein determining the codebook indication information corresponding to the data transmission layer according to the Type II codebook structure based on the Doppler domain enhancement comprises:

    determining non-zero coefficient quantity information and non-zero coefficient position indication information in a combination coefficient matrix corresponding to each transmission layer according to the codebook parameter and the first number; and
    determining the dominant coefficient indication information according to a correspondence relationship between the SDbasis or CSI-RS port and the DDbasis.

5. The method of claim 4, wherein the Type II codebook structure based on the Doppler domain enhancement comprises: a first codebook structure and a second codebook structure, wherein the first codebook structure comprises:

    a matrix composed of SD basis or a CSI-RS port selection matrix;
    the combination coefficient matrix;
    a matrix composed of FD basis; and
    a matrix composed of DD basis, and wherein the second codebook structure comprises:

        the matrix composed of SD basis or the CSI-RS port selection matrix;
        the combination coefficient matrix; and
        the matrix composed of FD basis.

6. The method of claim 5, wherein determining the non-zero coefficient quantity information of each transmission layer according to the codebook parameter and the first number comprises:
generating codebook indication information of the first codebook structure by selecting the same first number $S_v$ of DDbasis for each first combination, and determining the maximum non-zero coefficient number of each transmission layer as $K_0 = \beta 2LM_vS_v$, wherein each first combination comprises one SDbasis or CSI-RS port and one FD basis.

7. The method of claim 5, wherein determining the maximum non-zero coefficient quantity information of each transmission layer according to the codebook parameter and the first number comprises:

    determining a fourth number $M_v{}'$ of FD basis-DD basis pairs corresponding to the SDbasis or CSI-RS port; and
    generating codebook indication information of the first codebook structure by selecting the same fourth number $M_v{}'$ of FD basis-DD basis pairs for each SDbasis or CSI-RS port, and determining the maximum non-zero coefficient number of each transmission layer as $K_0 = \beta 2LM'_v$.

8. The method of claim 5, wherein determining the non-zero coefficient quantity information of each transmission layer according to the codebook parameter and the first number comprises:
in response to the matrix composed of DD basis in the first codebook structure being an identity matrix, determining the maximum non-zero coefficient number of each transmission layer as $K_0 = N * \beta 2LM_v$, wherein N is an order of the identity matrix.

9. The method of claim 5, wherein determining the non-zero coefficient quantity information of each transmission layer according to the codebook parameter and the first number comprises:
in response to the codebook indication information adopting the second codebook structure, generating a plurality pieces of codebook indication information, and determining the maximum non-zero coefficient number corresponding to each combination coefficient matrix in the codebook indication information as $K_0 = \beta 2LM_v$, wherein the codebook indication information comprises a plurality of different combination coefficient matrices.

10. The method of claim 5, wherein determining the non-zero coefficient quantity information of each transmission layer according to the codebook parameter and the first number comprises:
determining a fifteenth number $S'$ of SD basis-DD basis pairs corresponding to the FDbasis; and
generating codebook indication information of the first codebook structure by selecting the same fifteenth number $S'$ of SD basis-DD basis pairs for each FDbasis, and determining the maximum non-zero coefficient number of each transmission layer as $K_0 = \gamma M_v S'$.

11. The method of claim 5, wherein determining the non-zero coefficient quantity information of each transmission layer according to the codebook parameter and the first number comprises:
determining a sixteenth number $S''$ of SD basis-DD basis pairs corresponding to the DDbasis; and
generating codebook indication information of the first codebook structure by selecting the same sixteenth number $S''$ of SD basis-DD basis pairs for each DDbasis, and determining the maximum non-zero coefficient number of each transmission layer as $K_0 = \gamma S_v S''$.

12. The method of claim 5, wherein determining the non-zero coefficient quantity information of each transmission layer according to the codebook parameter and the first number comprises:

determining a fifth number $S_{l,v}$ of DD basis corresponding to each first combination, wherein the first combination comprises one SDbasis or CSI-RS port and one FD basis; and
generating codebook indication information of the first codebook structure by selecting the fifth number $S_{l,v}$ of the DD basis corresponding to each first combination, and determining the maximum non-zero coefficient number of each transmission layer as $K_0 = \beta \sum_{l=1}^{2LM_v} S_{l,v}$, wherein $l$ is an index of the first combination.

13. The method of claim 5, wherein determining the non-zero coefficient quantity information of each transmission layer according to the codebook parameter and the first number comprises:

determining a sixth number $M'_{l',v}$ of FD basis-DD basis pairs corresponding to each SDbasis or CSI-RS port; and
generating codebook indication information of the first codebook structure by selecting the sixth number $M'_{l',v}$ of FD basis-DD basis pairs corresponding to each SDbasis or CSI-RS port, and determining the maximum non-zero coefficient number of each transmission layer as $K_0 = \beta \sum_{l=1}^{2L} M'_{l',v}$, wherein $l'$ is an index of the SDbasis or CSI-RS port.

14. The method of claim 5, wherein determining the non-zero coefficient quantity information of each transmission layer according to the codebook parameter and the first number comprises:

in response to DD basis corresponding to each antenna polarization direction being same, determining a seventh number $S'_{l,v}$ of DD basis corresponding to each first combination, wherein the first combination comprises one SDbasis or CSI-RS port and one FD basis; and
generating codebook indication information of the first codebook structure by selecting the seventh number $S'_{l,v}$ of DD basis corresponding to each first combination, and determining the maximum non-zero coefficient number of each transmission layer as

$$K_0 = 2\beta \sum_{l=1}^{LM_v} S'_{l,v}$$ , wherein $l$ is an index of a third combination.

15. The method of claim 5, wherein determining the non-zero coefficient quantity information of each transmission layer according to the codebook parameter and the first number comprises:

in response to DD basis corresponding to each antenna polarization direction being same, determining an eighth number $M''_{l',v}$ of FD basis-DD basis pairs corresponding to each SD basis or CSI-RS port; and
generating codebook indication information of the first codebook structure by selecting the eighth number $M''_{l',v}$ of the FD basis-DD basis pairs corresponding to each SD basis or CSI-RS port, and determining the maximum non-zero coefficient number of each transmission layer as

$$K_0 = 2\beta \sum_{l=1}^{L} M''_{l',v}$$ , wherein $l'$ is an index of the SD basis or CSI-RS port.

16. The method of claim 6, further comprising:
determining a ninth number S, and selecting a bitmap with a size of $2LM_vS$ according to the ninth number S to indicate the non-zero coefficient position indication information.

17. The method of claim 7, further comprising:
determining a tenth number $M'$, and selecting a bitmap with a size of $2LM'$ according to the tenth number $M'$ to indicate the non-zero coefficient position indication information.

18. The method of claim 12 or 14, further comprising:
determining an eleventh number $S_l$, and selecting a bitmap with a size of $\sum_{l=1}^{2LM_v} S_l$ or $2\sum_{l=1}^{LM_v} S'_{l,v}$ according to the eleventh number $S_l$ to indicate the non-zero coefficient position indication information.

19. The method of claim 13 or 15, further comprising:
determining a twelfth number $M'_l$, and selecting a bitmap with a size of $\sum_{l=1}^{2L} M'_l$ or $2\sum_{l=1}^{L} M''_{l',v}$ according to the twelfth number $M'_l$ to indicate the non-zero coefficient position indication information.

20. The method of claim 8, further comprising:
selecting a bitmap with a size of $2L \times M_v$ according to the order N of the identity matrix to indicate the non-zero coefficient position indication information .

21. The method of claim 9, further comprising:
in response to the second codebook structure comprising a thirteenth number $N'$ of combination coefficient matrices, for each combination coefficient matrix, selecting a bitmap with a size of $2L \times M_v$ according to the third number to indicate the non-zero coefficient position indication information.

22. The method of claim 10, further comprising:
selecting a bitmap with a size of $M_vS'$ to indicate the non-zero coefficient position indication information.

23. The method of claim 11, further comprising:
selecting a bitmap with a size of $S_vS''$ to indicate the non-zero coefficient position indication information.

24. The method of any one of claims 16 to 19, wherein determining the maximum non-zero coefficient quantity information of each transmission layer according to the codebook parameter and the first number comprises one of:

in response to a transmission rank v being greater than 1, determining that a total number of non-zero coefficients is less than or equal to $2K_0$; or
in response to a transmission rank v being greater than 1, determining that a total number of non-zero coefficients is less than or equal to $K_0 * v$, wherein a number of the data transmission layers is determined by the transmission rank v.

25. The method of claim 20 or 21, wherein determining the maximum non-zero coefficient quantity information of each transmission layer according to the codebook parameter $\beta$ and the first number comprises:
in response to a transmission rank v being greater than 1, determining that a total number of non-zero coefficients is less than or equal to $2K_0 * N$.

26. The method of any one of claims 16 to 21, further comprising:

each data transmission layer adopting the same bitmap to indicate the non-zero coefficient position indication information; or
each data transmission layer adopting a bitmap of its own layer to indicate the non-zero coefficient position indication information; or
dividing the data transmission layers into transmission layer groups, wherein data transmission layers in each transmission layer group adopt the same bitmap to indicate the non-zero coefficient position indication information.

27. The method of any one of claims 2 to 26, further comprising:
in response to β=1 or γ=1, not reporting the non-zero coefficient position indication information.

28. The method of claim 16 or 17, wherein determining the dominant coefficient indication information comprises:
indicating the dominant coefficient indication information by information of $\lceil \log_2 2L \rceil$ bits.

29. The method of claim 18 or 19, wherein determining the dominant coefficient indication information comprises:
determining a size $K$ of the bitmap for indicating the non-zero coefficient position indication information, and indicating the dominant coefficient indication information by information of $\lceil \log_2 K \rceil$ bits based on the size $K$ of the bitmap.

30. The method of any one of claims 16 to 19, wherein determining the dominant coefficient indication information comprises:
indicating a dominant coefficient of the data transmission layer by information of $\lceil \log_2 K' \rceil$ bits, wherein $K'$ represents the maximum non-zero coefficient number or the number of non-zero coefficients corresponding to the data transmission layer.

31. The method of claim 20 or 21, wherein determining the dominant coefficient indication information comprises:
reporting $N$ or $N'$ dominant coefficients, wherein the dominant coefficient is indicated by one of following methods:

indicating the dominant coefficient indication information by information of $\lceil \log_2 2L \rceil$ bits; or
determining a size $K$ of the bitmap for indicating the non-zero coefficient position indication information, and indicating the dominant coefficient indication information by information of $\lceil \log_2 K \rceil$ bits based on the size K of the bitmap.

32. The method of claim 17, wherein determining the dominant coefficient indication information comprises:

indicating the dominant coefficient indication information by information of $\lceil \log_2 2LM_v' \rceil$ bits; or
indicating the dominant coefficient indication information by information of $\lceil log_2 2L \rceil + \lceil log_2 M_v Q \rceil$ bits.

33. The method of claim 22, wherein determining the dominant coefficient indication information comprises:

indicating the dominant coefficient indication information by information of $\lceil \log_2 M_v S' \rceil$ bits; or
indicating the dominant coefficient indication information by information of $\lceil \log_2 M_v \rceil + \lceil \log_2 2L S_v \rceil$ bits; or
indicating the dominant coefficient indication information by information of $\lceil \log_2 M_v \rceil$ bits.

34. The method of claim 23, wherein determining the dominant coefficient indication information comprises:

indicating the dominant coefficient indication information by information of $\lceil log_2 S_v S'' \rceil$ bits; or
indicating the dominant coefficient indication information by information of $\lceil log_2 S_v \rceil + \lceil log_2 2L M_v \rceil$ bits; or
indicating the dominant coefficient indication information by information of $\lceil log_2 S_v \rceil$ bits.

35. The method of any one of claims 1 to 34, wherein a first number $S_v$ of DDbasis, a second number L of SDbasis or CSI-RS ports, a third number $M_v$ of FDbasis, and a transmission rank v are determined according to configuration indication of the network device or determined by the terminal.

36. The method of any one of claims 1 to 34, wherein a first codebook parameter $\beta$ and a second codebook parameter $\gamma$ are determined by configuration of the network device.

37. An indication reporting method, performed by a network device, comprising:

receiving codebook indication information sent by a terminal, wherein the codebook indication information comprises at least one of: non-zero coefficient quantity information, non-zero coefficient position indication information, or dominant coefficient indication information; and
determining precoding of downlink data transmission according to the codebook indication information.

38. A communication apparatus, comprising:

a processing module, configured to determine codebook parameter information, and determine codebook indication information corresponding to a data transmission layer according to the codebook parameter information; and

a transceiver module, configured to send the codebook indication information to a network device,

wherein the codebook indication information comprises at least one of:

non-zero coefficient quantity information, wherein a number of non-zero coefficients included in the non-zero coefficient quantity information is less than or equal to a maximum non-zero coefficient number, the number of non-zero coefficients is a number of non-zero coefficients of each data transmission layer or a number of non-zero coefficients of all data transmission layers, and the maximum non-zero coefficient number is a maximum non-zero coefficient number of each data transmission layer or a maximum non-zero coefficient number of all data transmission layers;

non-zero coefficient position indication information; or

dominant coefficient indication information.

39. A communication apparatus, comprising:

a transceiver module, configured to receive codebook indication information sent by a terminal, wherein the codebook indication information comprises at least one of: non-zero coefficient quantity information, non-zero coefficient position indication information, or dominant coefficient indication information; and

a processing module, configured to determine precoding of downlink data transmission according to the codebook indication information.

40. A communication apparatus, comprising: a processor and a memory for storing a computer program, wherein when the computer program stored in the memory is executed by the processor, the communication device is caused to implement the method according to any one of claims 1 to 36 or claim 37.

FIG. 1

| determining codebook parameter information, and determining codebook indication information corresponding to a data transmission layer according to the codebook parameter information | S201 |

| sending the codebook indication information to a network device | S202 |

FIG. 2

| determining a Type II codebook structure based on Doppler domain enhancement according to the codebook parameter information | S301 |

| determining the codebook indication information corresponding to the data transmission layer according to the Type II codebook structure based on the Doppler domain enhancement, in which the codebook indication information is configured to determine relevant information included in a combination coefficient matrix in the Type II codebook structure based on the Doppler domain enhancement | S302 |

FIG. 3

determining non-zero coefficient quantity information and non-zero coefficient position indication information in a combination coefficient matrix corresponding to each transmission layer according to the codebook parameter and the first number — S401

determining the dominant coefficient indication information according to a correspondence relationship between the SD basis or CSI-RS port and the DD basis — S402

FIG. 4

receiving codebook indication information sent by a terminal, in which the codebook indication information includes at least one of: non-zero coefficient quantity information, non-zero coefficient position indication information, or dominant coefficient indication information — S501

determining precoding of downlink data transmission according to the codebook indication information — S502

FIG. 5

60

communication apparatus

transceiver module — 601

processing module — 602

FIG. 6

70

701 processor

702 memory

703 computer program

706 interface circuit

704 transceiver

705 antenna

FIG. 7

801 processor

803 memory

802 interface

FIG. 8

## INTERNATIONAL SEARCH REPORT

| International application No. |
| --- |
| **PCT/CN2023/076991** |

### A. CLASSIFICATION OF SUBJECT MATTER

H04L 27/00(2006.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 码本, 参数, 时域, 空域, 频域, 非零系数, 个数, 位置, 最强系数, codebook, parameter, time domain, spatial domain, frequency domain, non-zero coefficient, number, location, strongest coefficient

### C. DOCUMENTS CONSIDERED TO BE RELEVANT

| Category* | Citation of document, with indication, where appropriate, of the relevant passages | Relevant to claim No. |
| --- | --- | --- |
| X | CN 111726154 A (CHINA ACADEMY OF TELECOMMUNICATION TECHNOLOGY) 29 September 2020 (2020-09-29) description, paragraphs [0346]-[0364], and figures 19-24 | 1, 37-40 |
| X | CN 111525947 A (CHINA ACADEMY OF TELECOMMUNICATION TECHNOLOGY) 11 August 2020 (2020-08-11) description, paragraphs [0090]-[0151] | 1, 37-40 |
| X | CN 111756419 A (CHINA ACADEMY OF TELECOMMUNICATION TECHNOLOGY) 09 October 2020 (2020-10-09) description, paragraphs [0098]-[0242] | 1, 37-40 |
| X | CN 111756417 A (CHINA ACADEMY OF TELECOMMUNICATION TECHNOLOGY) 09 October 2020 (2020-10-09) description, paragraphs [0102]-[0214] | 37, 39-40 |
| A | CN 111512564 A (GUANGDONG OPPO MOBILE TELECOMMUNICATIONS CORP., LTD.) 07 August 2020 (2020-08-07) entire document | 1-40 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 June 2023** | **21 June 2023** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/076991** |

**C.    DOCUMENTS CONSIDERED TO BE RELEVANT**

| Category* | Citation of document, with indication, where appropriate, of the relevant passages | Relevant to claim No. |
| --- | --- | --- |
| A | HTC CORP. "Enhanced PMI indication for refining MIMO precoder codebook" *3GPP TSG-RAN WG1 #60 R1-101009,* 26 February 2010 (2010-02-26), entire document | 1-40 |

Form PCT/ISA/210 (second sheet) (July 2022)

**INTERNATIONAL SEARCH REPORT**
**Information on patent family members**

International application No.

**PCT/CN2023/076991**

| Patent document cited in search report | | | Publication date (day/month/year) | Patent family member(s) | | | Publication date (day/month/year) |
|---|---|---|---|---|---|---|---|
| CN | 111726154 | A | 29 September 2020 | WO | 2020186871 | A1 | 24 September 2020 |
| | | | | KR | 20210138749 | A | 19 November 2021 |
| | | | | EP | 3944511 | A1 | 26 January 2022 |
| | | | | US | 2022149909 | A1 | 12 May 2022 |
| CN | 111525947 | A | 11 August 2020 | KR | 20210116590 | A | 27 September 2021 |
| | | | | WO | 2020156136 | A1 | 06 August 2020 |
| | | | | EP | 3920431 | A1 | 08 December 2021 |
| | | | | US | 2022116093 | A1 | 14 April 2022 |
| CN | 111756419 | A | 09 October 2020 | WO | 2020192346 | A1 | 01 October 2020 |
| | | | | EP | 3952127 | A1 | 09 February 2022 |
| | | | | US | 2022182121 | A1 | 09 June 2022 |
| CN | 111756417 | A | 09 October 2020 | | None | | |
| CN | 111512564 | A | 07 August 2020 | WO | 2019242024 | A1 | 26 December 2019 |

Form PCT/ISA/210 (patent family annex) (July 2022)

**REFERENCES CITED IN THE DESCRIPTION**

**Patent documents cited in the description**

- CN 2022122940 W